(19) Europäisches Patentamt
European Patent Office
Office européen des brevets

(11) Publication number : 0 558 233 A1

(12) **EUROPEAN PATENT APPLICATION**

(21) Application number : 93301147.0

(51) Int. Cl.$^5$ : G01N 27/447

(22) Date of filing : 17.02.93

(30) Priority : 24.02.92 GB 9203872

(43) Date of publication of application : 01.09.93 Bulletin 93/35

(84) Designated Contracting States : CH DE FR IT LI NL

(71) Applicant : THE GENERAL ELECTRIC COMPANY, p.l.c.
1 Stanhope Gate
London W1A 1EH (GB)

(72) Inventor : Koening, Jennifer Ann
1 Waterside
Peartree Bridge, Milton Keynes MK6 3DE (GB)

(74) Representative : Wood, John Irwin
The General Electric Company plc GEC Patent Department Waterhouse Lane
Chelmsford, Essex CM1 2QX (GB)

(54) **Improved electrophoretic analysis method and apparatus.**

(57) In an electrophoretic method of analysing a sample, the sample is in solution form, and is subjected to voltage pulses in an electrophoretic cell. The cell is of capillary form and includes a plurality of electrodes (5,7) connected in groups (G1,G2). A potential is applied sequentially to the selected groups (G1,G2), so as to give an electrophoretic wave effect and to cause an ionic transfer within the sample from one end of the cell to the other. The quantum of ionic materials transferred is then detected and measured.

Fig.1.

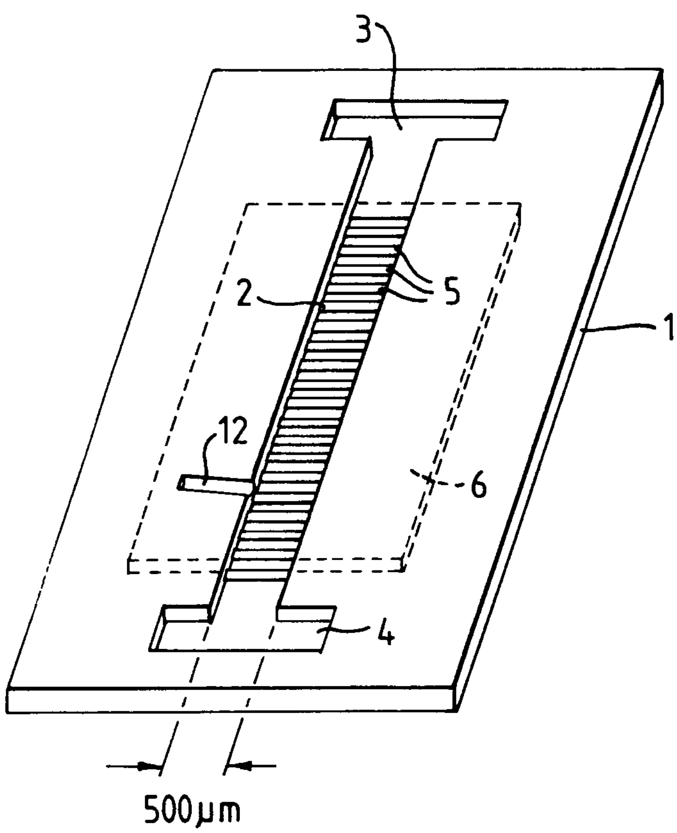


EP 0 558 233 A1

Fig.5.

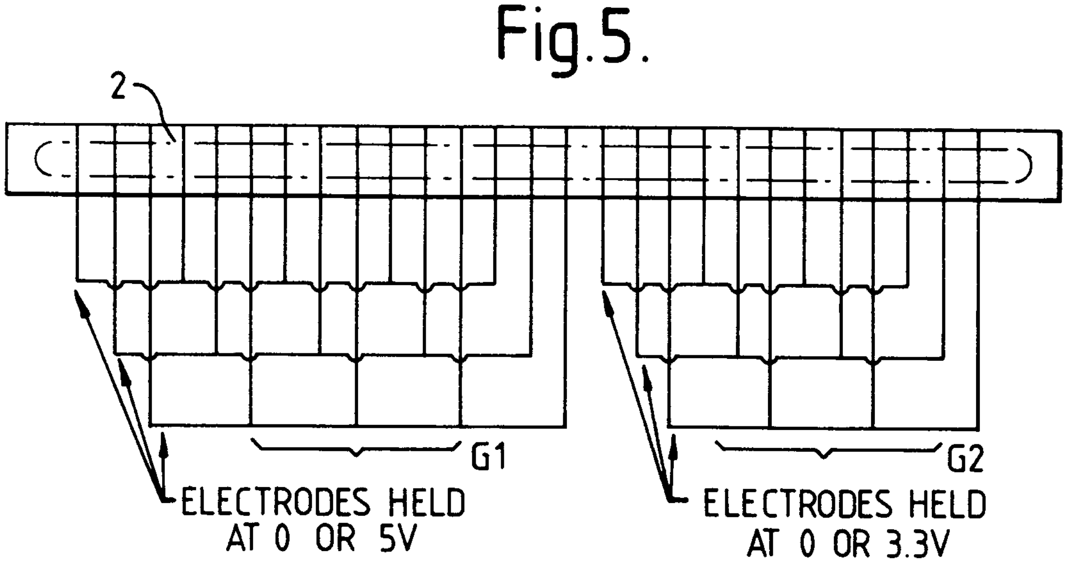

This invention relates to a method for the electrophoretic analysis and detection of the sample material and is particularly useful for dealing with small samples of material.

The use of electrophoresis is well known in sampling and analytical circles as a technique in which ions in solution are separated from each other by subjecting them to an electrical field so that the ions may be detected both qualitatively and quantitatively for analysis purposes.

The use of the electrophoretic effect is well known for purposes as blood dialysis, the cleansing of sea water by de-ionising it and the analysis of small samples of blood or bio-related material.

The electrophoretic principles upon which the proposal will work rely on the fact that different ions of different chemicals have a characteristic mobility which varies between the materials. Thus by moving the ions through a cell for a set length of time, it is possible to separate the faster moving ions from the slower moving ions for analysis or for other purposes. By pulsing the ions, the ions can be made to move in a peristaltic manner and such a techique is disclosed in the specification of US. Patent No.3846274 where a large cell is disclosed, having a plurality of plate-like mesh electrodes suspended in an electrolyte separated by mesh insulating plates. The electrodes are connected in groups to sources of potential and the potential is applied periodically to different groups. This has the effect of causing the ions of the electrolyte to be successively transferred to other electrodes along the cell until they arrive at the end electrode in the region of which they all gather and can be analysed by optical or other methods. A similar system is illustrated in the specification of East German Patent Application No.268877 where a voltage of about 200 volts is applied to the electrodes to cause ion migration and a concentration of ions at one end of the cell. The ion movement is the result of no reaction taking place with the electrodes so that there is no ion exchange as in a normal electrolysis cell. Unfortunately the voltages used in the above German specification are too high for the application to be applied easily for a portable device which can be used in the field on small samples. Such a system is expected to be much less efficient than a miniaturised version where there is a limited amount of electrolyte and only a small sample is used and where the sample is injected into a small, well-defined area.

It is an object of the present invention to provide a small transportable low voltage device which can be used to analyse small samples of material using an electrophoretic process.

To this end there is provided according to a first aspect of the present invention, an electrophoretic method of analysing a sample, wherein the sample is in solution form which comprises the steps of subjecting the sample to an electrophoretic cell of capillary form and including a plurality of electrodes connected in groups, and applying sequentially a potential to the selected groups so as to give an electrophoretic wave effect and cause an ionic transfer within the sample from one end of the cell to the other and including detecting and measuring the quantum of ionic material transferred.

By using a cell of capillary form the sample in solution to be analysed may be drawn into the cell by capillary action. Alternatively it may be drawn in by a pump or such an action or fed in by any other convenient method. The sample could be introduced into a small area of the electrophoretic cell, the remainder of the cell being filled with a dilute aqueous solution.

Instead of being in the form of a solution the cell may be filled with a gel.

The sample may contain a plurality of substances to be analysed and includes the step of applying different voltages to different groups of the electrodes within the cell so as to achieve an intermediate sampling of ions of different materials. In order to achieve this the spacing between electrodes in the cell may be varied or alternatively there may be a different voltage level applied to selected groups of electrodes.

According to another aspect of the invention an electrophoretic cell in accordance therewith comprises a pair of substrates each carrying a plurality of spaced electrodes. The electrodes of each substrate being situated opposite the electrodes of the other substrate and separated therefrom by a channel into which the sample to be analysed is introduced and including means for successively applying a potential to the electrodes in order to concentrate the ions of the substance of the sample being analysed to one end of the channel.

Where there is a concentration of analyte, for example where there is a change in voltage amplitude, a secondary channel is provided to draw off analyte as it is accumulated, thus optimising the ultimate concentration capacity. The cell may include a collecting channel for the polarised analyte.

The cell includes a channel of a capillary nature and the electrodes are preferably electrically insulated from the sample to be analysed in the channel.

The electrodes are preferably connected in groups and a convenient connection is that every third electrode may belong to the same group. The electrodes may receive a D.C. voltage in the order of 5 to 20 volts.

The cell may be provided with an external profile which is of a narrow tapered configuration so as to form a probe. Means may be provided with means for closing off the channel so as to retain the sample in the cell.

A secondary channel may be incorporated in the cell connected to the main channel and adapted to receive a sample and to be retained therein for later extraction or processing.

Any sample to be analysed is preferably contained in a pH buffered aqueous salt solution.

In order that the invention may be readily understood examples of electrophoretic cells in accordance therewith and including the method thereof will now be described with reference to the accompanying drawings.

In the drawings:

Figure 1 shows a first example of a cell in perspective view and;

Figure 2 shows a longitudinal section of the cell through Figure 1 ;

Figure 3 is a diagram indicating the theory in operation of wave electrophoresis for two molecules in the cell of Figures 1 and 2 and,

Figure 4 shows the molecule migration where there is a change between the electrode spacings along the cell,

Figue 5 is an alternative cell construction showing electrodes arranged in two groups and with each group connected to a different level voltage source.

Figure 6 is the perspective view of a modified version of the cell of Figure 1 and

Figure 7 is an adaptation of the cell of Figure 5 to a probe form.

Referring first to the drawings and particularly to Figures 1 and 2, this example shows a substrate 1 of silicon or silica, although another material such as a plastics material may be used, in which a trench 2 has been cut to a depth of the order of 50 to 100 um deep and having a width of 500 um. The trench is 2 - 5 cm long. The trench may be formed in a manner such as that described in our co-pending application No.9105706.7

The trench 2 has wells 3, 4 formed at its end, which are enlarged portions cut out of the silicon or silica substrate. A layer of metal electrodes 5 are deposited, placed or set into the substrate 1 at the base of the trench 2 and these electrodes 5 are spaced apart by approximately 200 to 500 um. A cover plate 6 is placed over the trench and this includes corresponding electrodes 7 to the electrodes 5 and these electrodes 7 are spaced equally with the electrodes 5 and are located so that they are diametrically opposite each other. The electrodes have a square section of approximately 10 μm. The face of the electrodes 5 and 7 are each covered with a layer of silicon dioxide of about 10 um thickness.

The cover plate 6 is laid on top of the substrate 1 and is secured thereto by suitable means such as glueing or by fusing. The space in the capillary trench 2 is filled with the sample material to be analysed 8 and this can be injected into the trench from the wells 3, 4. The material may be drawn into the trench 2 by its own capillary action or may be positively injected or sucked into the trench. Alternatively, a secondary channel 12 perpendicular to the main trench can be used for the injection of small volumes. Because of the small size of the trench a relatively small sample of liquid or electrolyte is needed for analysis purposes.

The electrodes 5 and 7 are connected in grouped sets and are connected such that the first electrodes are connected to the fourth electrode and subsequently to every third electrode, i.e. 7, 10 etc. The second electrode is similarly connected to electrodes 5, 8 etc. and the third group of electrodes constitutes electrodes at positions 3, 6, 9 etc.

Preferably the end electrode is not connected in a group but is held at zero potential to ensure that there is migration away from this electrode. The electrodes have a potential and this example one of 5 volts, although it may be of any other value, switched successively between the groups attached to electrodes 1, 2 and 3. While the potential of 5 volts is on only 1 group of electrodes the other groups are at zero volts. The effect of the switching of the voltages creates the electrophoretic separation of ions required in the sample solution and the ions migrate from the electrodes of the first group initially to the electrodes of the second group and then to the electrodes of the third group. This creates an electrophoretic wave and is similar to the peristaltic effect which is described in the above referred to U.S. Patent specification No. 3846274. The ion molecules gradually move along the cell and concentrate at the end away from the electrode held at zero potential. The speed with which this happens depends on the electrophoretic mobility of the particular substance being analysed. The electrophoretic mobilities and velocities of some sample molecules are given in the following table:-

| SUBSTANCE | 4 ($cm^2.V^{-1}$ $S^{-1}$) | V* ($mm.s^{-1}$) | t (S)** |
|---|---|---|---|
| | | | |
| Acetate | 4.2 | 0.84 | 0.595 |
| Propanoate | 3.7 | 0.74 | 0.676 |
| | | | |
| 3-methylpridine | 1.0 | 0.20 | 2.5 |
| 4-methylpyridine | 1.8 | 0.36 | 1.39 |

* Velocity at an electric field strength of 200 $V.cm^{-1}$

** Time taken for ion to move a standard distance of 500 um in an electric field of 200 $V.cm^{-1}$

The switching speed between the groups of electrodes will be determined by the electrophoretic mobility of the molecules and as can be seen from Figure 3, to which reference is now made, the molecule A with the greatest mobility will move along the electrodes whereas molecules B with a low mobility will not move but will hover around the initial electrodes as the voltage is changed. This gives the separation which is needed.

If more than one substance is to be isolated from the sample this can be done by altering the effective field strength between the electrodes either by changing interelectrode spacing <u>or</u> by changing the applied voltage. Certain of the molecules will only be moved where the electrodes are relatively close together and where the spacing is greater they will not alter. This will depend on their electrophoretic mobilities. The effect of this is illustrated in Figure 4 to which reference is now made, here the positions of ions on molecules A, B and C at various locations along the trench 2 are shown. A voltage of 5 volts is applied to the electrodes. The length of the trench is shown in millimetres against a time base in seconds. It is assumed in this example that the first 10 electrodes are placed 250 μm apart and that molecule B has a low electrophoretic mobility whereas molecule C has a high electrophoretic mobility with regard to molecule A. After the tenth electrode the spacing between the electrodes is increased to 375 um. Over the first ten electrodes both molecules A and B are progressed up to the tenth electrode while molecule B stays around the first electrode. After this molecule A is unable to be transferred further and only molecule C will be transferred to the end of the trench 2. Molecule A will be concentrated around electrode 10 and can be analysed in this position.

If reference is now made to Figure 5 this example shows a cell in which the electrodes 5, 7 are arranged in two groups G1 and G2 along the cell. The electrodes are all equally spaced but those in the first group G1 are held at voltage levels 0 and 5 volts and therefore Group G2 are held at voltage limit 0 and 3.3 volts. The effect of this is the same as in Figure 4 with certain ions transferred to the end of one group of electrodes and selected other ions transferring on to the end of the other group of electrodes.

In order to detect the ions concentrated at their respective electrodes suitable optical detection devices can be situated in the area of these electrodes and since the substrate one is of silicon and is transparent an absorbance or fluorescence detection device can be used for assay purposes. Alternatively electrochemical detection could be used.

Preferably the sample is used with a buffered solution.

A modification of the cell of figures 1 and 2 is shown in Figure 5 to which reference is now made and the main difference here is that the substrate 1 has a further channel 9 formed in it at right angles to the trench 2. This channel 9 replaces effectively the well 4. A sample analyte is sent through the channel 9 in the direction of the Arrow and the sample is drawn up by capillary action into the trench 2. Analysis then takes place in accordance with the method described with reference to the previous figures.

The cell of Figure 5 can be further modified as is shown in Figure 6, to which reference is now made where the cell itself is given an outer configuration with a tapered exterior so as to become a probe. The well 3 is dispensed with and becomes the open mouth of the probe at 13 and the tapered sides of the probe are shown as 11 and 12. The trench 2 connects with the channel 9 and a tap or block can be put on this channel 9 to captivate the sample. In this case the channel 9 is not used to receive a samples through flow but the sample is draw up by capillary action from the entrance 13 to the trench 2. This type of device operates in the same manner as previously described and is very useful for use in field work where a sample has to be taken away from the base and possibly only a small amount of sample is necessary for analysis. This may be particularly important where substances such as blood are being analysed or where river waters are being checked for pollution. Since the cell only requires a 5 volt source this can be provided from a battery and does not require connections to a main or a heavy duty source of potential. Again the electrodes in the cell of Figure 6 can be altered in spacing to allow a "multi analyte" detection to be effected.

The invention provides a form of electrophoretic cell which is relatively easy to manufacture and control and which only requires a small sample as opposed to previous proposals for electrophoretic analysis.

## Claims

1. An electrophoretic method of analysing a sample, wherein the sample is in solution form, comprising the steps of subjecting the sample to an electrophoretic cell of capillary form and including a plurality of electrodes connected in groups and applying sequentially a potential to the selected groups, so as to give an electrophoretic wave effect and to cause an ionic transfer within the sample from one end of the cell to the other and detecting and measuring the quantum of ionic materials transferred.

2. A method as claimed in Claim 1 in which the solution is drawn into the cell by capillary action.

3. A method as claimed in Claim 1 wherein the cell is filled a gel.

4. A method as claimed in any preceding claim and including in the sample a plurality of substances to be analysed including the step of applying different voltages to different groups of electrodes within the cell to achieve an intermediate sampling of ions.

5. A method as claimed in any one of Claims 1, 2 or 3 wherein the spacing between electrodes in the cell is varied so as to achieve the multiple sampling of different constituents of the sample.

6. An electrophoretic cell comprising a pair of substrates each carrying a plurality of spaced electrodes, the electrodes of each substrate being situated opposite the electrodes of the other substrate and separated therefrom by a channel into which a sample to be analysed is introduced; means for successively applying a potential to the electrodes in order to concentrate the ions of the substance of the sample being analysed to one end of the channel.

7. A cell as claimed in Claim 6 and including a collecting channel for the polarized analyte.

8. A cell as claimed in Claim 6 or Claim 7 wherein the channel is of a capillary nature.

9. A cell as claimed in any one of Claims 6 to 8 in which the electrodes are electrically insulated from the solution.

10. A cell as claimed in any one of Claims 6 to 9 in which the electrodes are connected in groups.

11. A cell as claimed in Claim 10 where in every third electrode belongs to the same group.

12. A cell as claimed in any preceding Claim in which a voltagein the range 2-20 volts is applied to the electrodes.

13. A cell as claimed in Claim 12 in which the voltage is of the order of 5 volts.

**14.** A cell as claimed in any one of Claims 6 to 13 in which the external profile of the cell is of a narrowed, tapered configuration so as to form a probe.

**15.** A cell as claimed in Claim 14 and including means for closing off the channel so as to retain the sample in the cell.

**16.** A cell as claimed in Claim 15 and including a secondary channel connected to the main channel adapted to receive a sample and to be retained therein for later extraction or processing.

**17.** A cell as claimed in any one of Claims 6 to 16 in which the sample is contained in a pH buffered aqueous salt solution.

Fig.1.

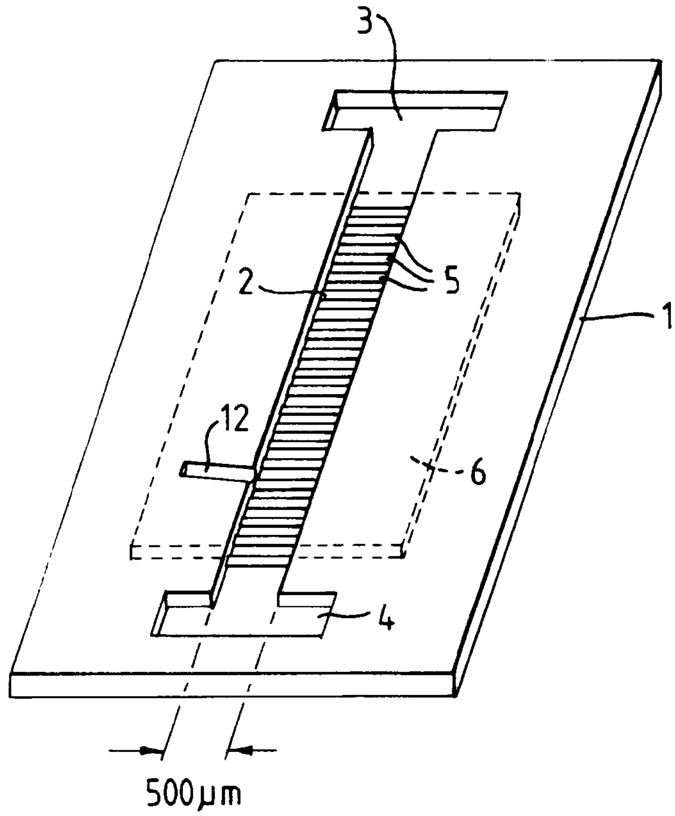


Fig. 2.

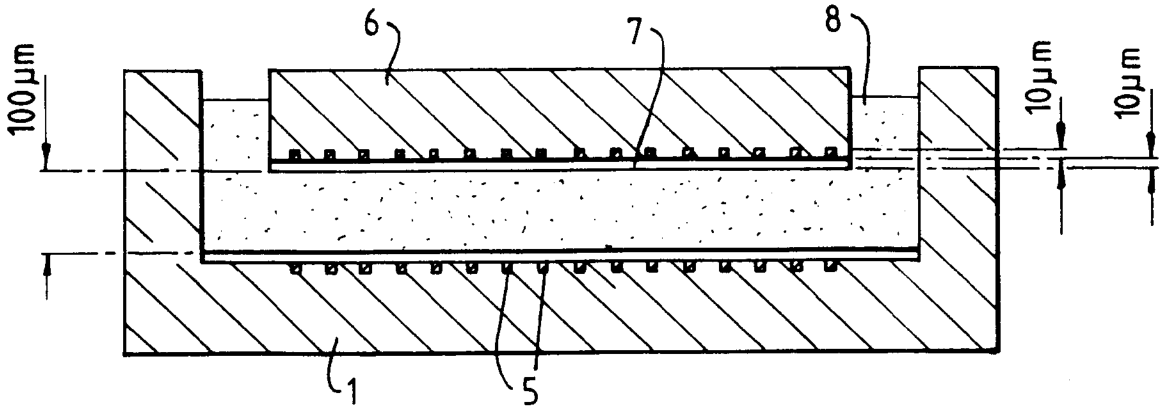

Fig.3.

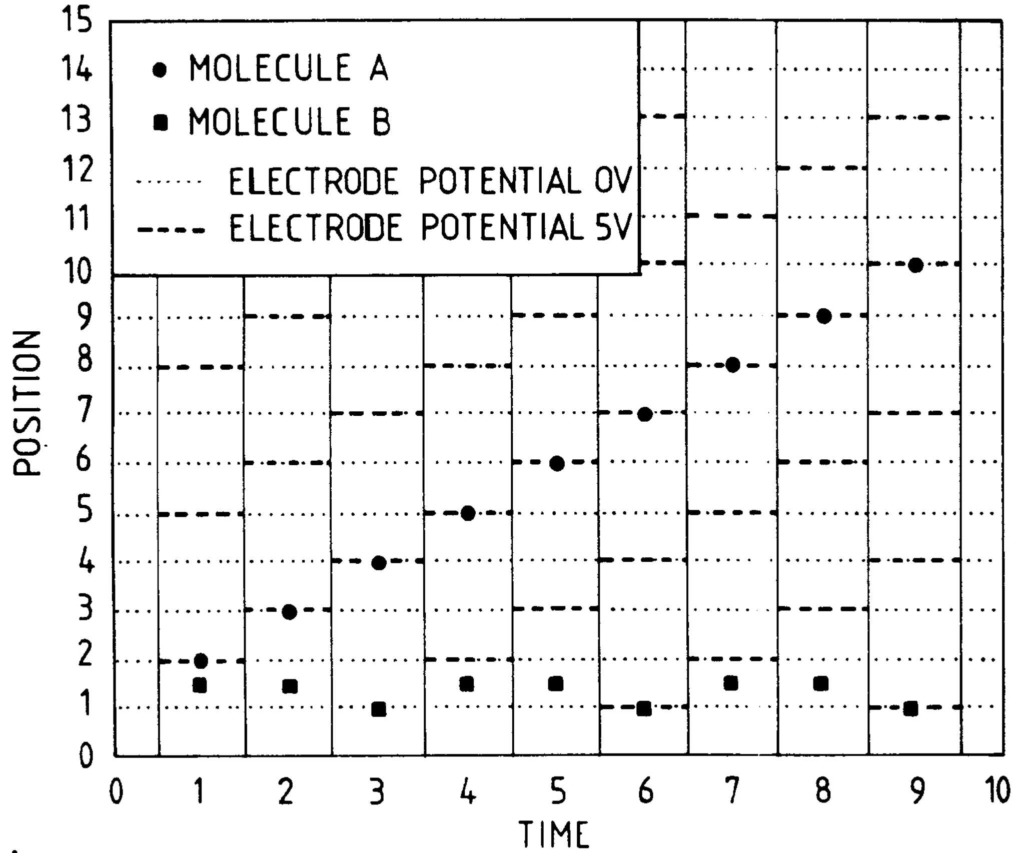
MOLECULE A
MOLECULE B
ELECTRODE POTENTIAL 0V
ELECTRODE POTENTIAL 5V
POSITION
TIME
0 1 2 3 4 5 6 7 8 9 10 11 12 13 14 15
0 1 2 3 4 5 6 7 8 9 10

Fig.4.

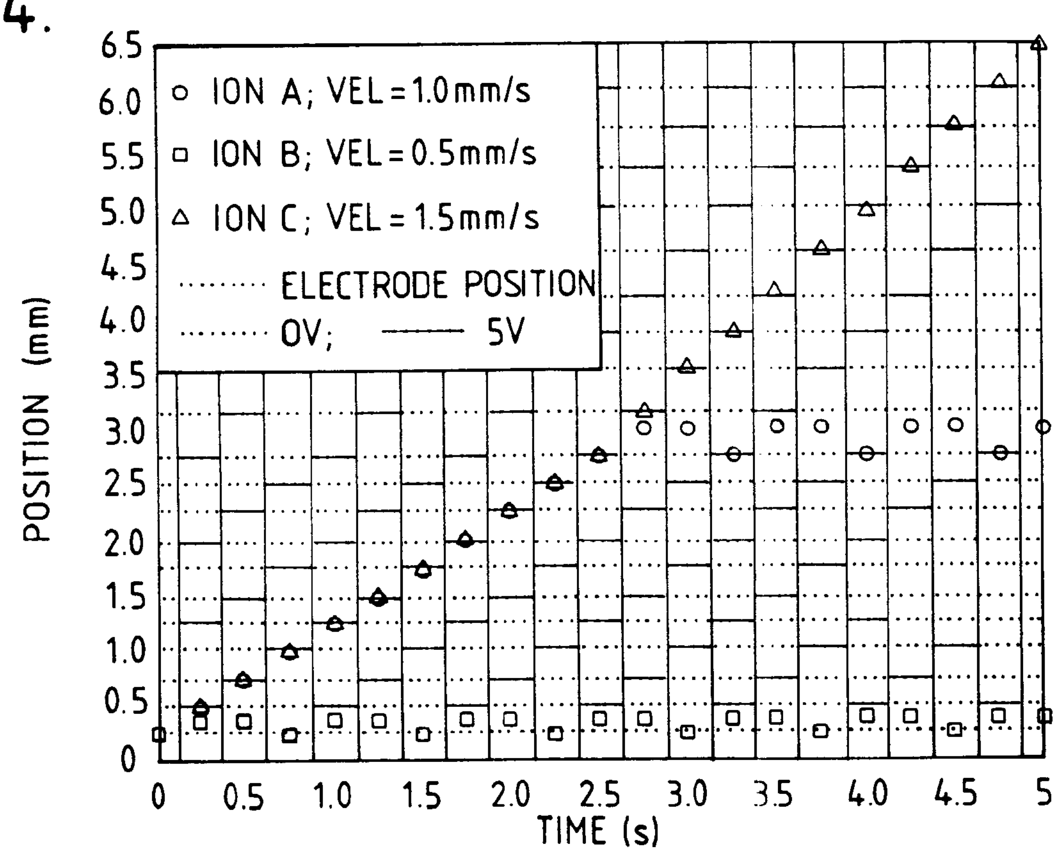
ION A; VEL=1.0mm/s
ION B; VEL=0.5mm/s
ION C; VEL=1.5mm/s
ELECTRODE POSITION
0V; 5V
POSITION (mm)
TIME (s)
0 0.5 1.0 1.5 2.0 2.5 3.0 3.5 4.0 4.5 5.0 5.5 6.0 6.5
0 0.5 1.0 1.5 2.0 2.5 3.0 3.5 4.0 4.5 5

Fig.5.

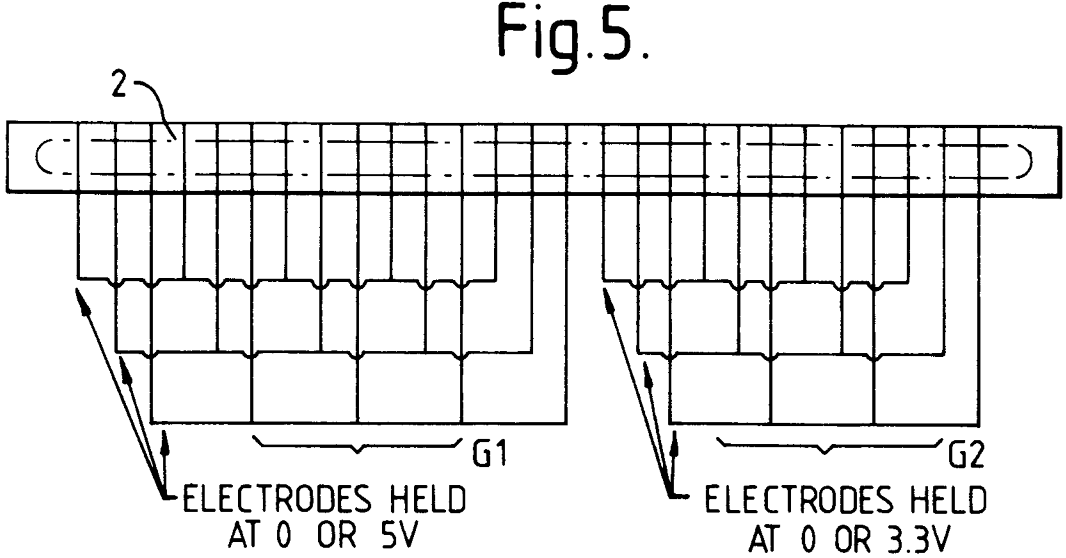
2
G1
G2
ELECTRODES HELD AT 0 OR 5V
ELECTRODES HELD AT 0 OR 3.3V

Fig. 6.

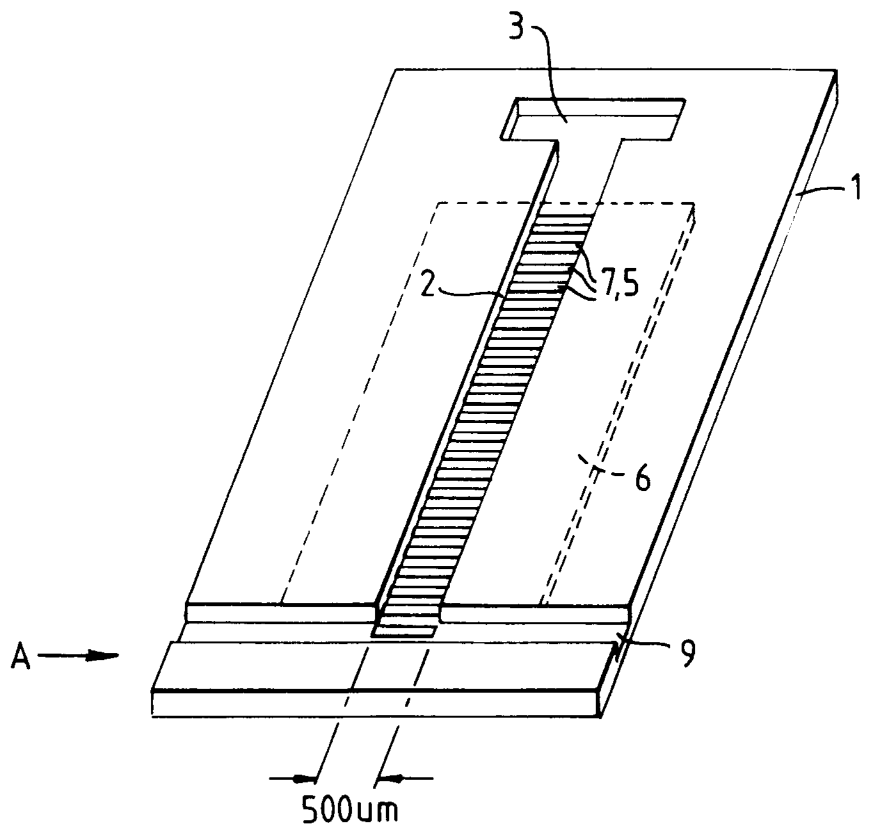
3
1
2
7,5
6
A
9
500um

Fig. 7.

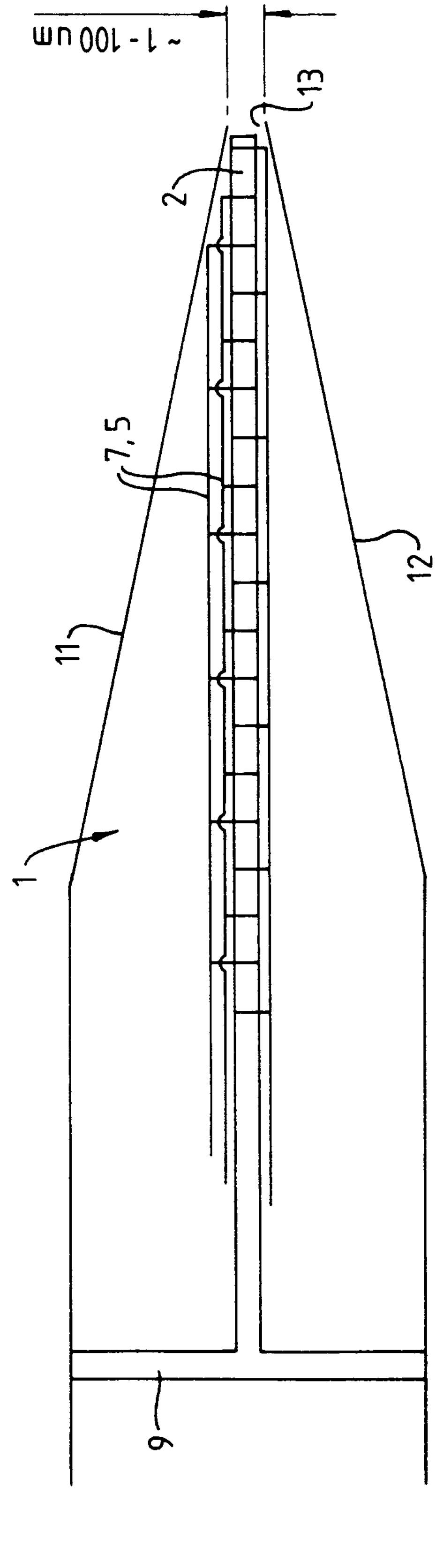

European Patent Office

# EUROPEAN SEARCH REPORT

Application Number
EP 93 30 1147

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0 356 187 (THE BOARD OF TRUSTEES OF THE LELAND STANFORD JUNIOR UNIVERSITY) * page 6, line 24 - page 7, column 7; figure 5 * --- | 1 | G01N27/447 |
| X | US-A-4 900 414 (SIBALIS) * the whole document * --- | 1 | |
| A | US-A-5 084 157 (CLARK ET AL.) * figure 3A * ----- | 1-17 | |
| | | | TECHNICAL FIELDS SEARCHED (Int. Cl.5 ) |
| | | | G01N |

The present search report has been drawn up for all claims

| Place of search | Date of completion of the search | Examiner |
|---|---|---|
| THE HAGUE | 13 APRIL 1993 | KOUZELIS D. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P0401)